# EUROPÄISCHE PATENTSCHRIFT

(11) **EP 1 307 617 B1**
(45) Veröffentlichungstag und Bekanntmachung des Hinweises auf die Patenterteilung: **04.05.2005**
(21) Anmeldenummer: 01980231.3
(22) Anmeldetag: 02.08.2001
(51) Int. Cl.: E01H 5/10, B60B 39/00

(54) **Verfahren zum Erwärmen oder Abtauen von Strassenoberflächen**
Method for warming or defrosting road surfaces
Procédé pour le rechauffage ou le dégivrage de surfaces de chassée

(30) Priorität: 10.08.2000 DE 10039178
(43) Veröffentlichungstag der Anmeldung: 07.05.2003
(73) Patentinhaber: Uboldi, Andrea, 22070 Fenegro (IT)
(72) Erfinder: Uboldi, Andrea, 22070 Fenegro (IT)
(74) Vertreter: Appelt, Christian W.
(86) Internationale Anmeldenummer: PCT/EP2001/008976
(87) Internationale Veröffentlichungsnummer: WO 2002/012635

(56) Entgegenhaltungen:
- DE-A- 3 402 439
- DE-A- 4 323 700

## Beschreibung

Die Erfindung betrifft ein Verfahren zum Erwärmen oder zum Abtauen von Straßenoberflächen, bei dem die Oberfläche mit einer elektromagnetischen Strahlung bestrahlt wird.

Zum Räumen von Straßen und Wegen und ähnlichem von Schnee und Eis ist es bekannt, Räumgeräte, z. B. Schneepflüge oder Schneefräsen einzusetzen. Insbesondere zum Beseitigen von Eis oder festgefahrenem oder festgetretenem Schnee ist es ferner bekannt, Salz zu streuen, damit der Gefrierpunkt des Wassers heruntergesetzt wird und das Eis auf den Straßen und Wegen abgetaut wird.

Insbesondere um Umweltbelastungen durch das Streuen von Salz zu vermeiden, ist es vorgeschlagen worden, zum Abtauen von Schnee und Eis von Straßen und Wegen, die Oberfläche mit starken Mikrowellen-Richtstrahlern zu bestrahlen, um Schnee und Eis sehr schnell zu erhitzen und zu tauen oder sogar zu verdampfen.

Ein solches Verfahren und eine entsprechende Vorrichtung sind beispielsweise in der DE 34 02 439 A1 offenbart. Ein "Räumfahrzeug" mit Mikrowellen-Richtstrahlern sehr hoher Leistung erfordert, wie es auch in der DE 34 02 439 A1 explizit erläutert ist, sehr hohe Energie und hohe Investitionskosten bei der Bereitstellung entsprechender Fahrzeuge mit Hochleistungsmikrowellen-Richtstrahlern. Darüber hinaus kann das Abstrahlen hochenergetischer Mikrowellenleistung Gefahren für die Umgebung, insbesondere für Menschen und Tiere, die aus Versehen in den Bereich der Mikrowellenstrahlung geraten, hervorrufen.

Ein ähnliches Verfahren ist aus der WO 96/10115 bekannt, welches ein Verfahren zum Auflösen von Nebel oder zum Schmelzen von Eis und Schnee in einem begrenzten Bereich offenbart. Als Abstrahlenergie wird entweder Wärmestrahlung oder Infrarot oder Mikrowellenstrahlung vorgeschlagen.

Aus der DE 24 53 151 A1 ist ferner ein Verfahren und eine Vorrichtung zum Aufschließen und Entfernen von Eisschichten mittels elektromagnetischer Wellen bekannt, bei dem ausschließlich elektromagnetische Wellen diskreter schmaler Frequenzbänder verwendet werden, die den Absorptionsspektrallinien der Hauptbestandteile von Eis entsprechen.

Aus der US 3,964,183 und der DE 91 13 657.1 U1 sind ebenfalls spezielle Enteisungsvorrichtungen bekannt, bei denen mittels starker Strahlungsquellen ein sofortiges Enteisen vorzugsweise von Straßenoberflächen erzielt werden soll.

Es ist demnach Aufgabe der vorliegenden Erfindung, ein Verfahren zum Erwärmen oder Abtauen von Straßenoberflächen bereitzustellen, das die oben erläuterten Nachteile des Standes der Technik, insbesondere das hohe Verletzungsrisiko aufgrund der hochenergetischen Mikrowellenstrahlung sowie die hohen Investitionskosten, beseitigt.

Diese Aufgabe wird durch ein Verfahren gemäß Anspruch 1 gelöst. Die Ansprüche 2 bis 12 beschreiben besonders vorteilhafte Ausführungsformen des erfindungsgemäßen Verfahrens.

Bei dem erfindungsgemäßen Verfahren wird die Oberfläche von Straßen oder Wegen mit einer elektromagnetischen Strahlung bestrahlt, wobei die Bestrahlung durch eine Vielzahl voneinander unabhängiger Strahlungsquellen realisiert wird, die nacheinander und zeitlich voneinander beabstandet Energie auf die Straßenoberfläche abgeben.

Dadurch wird zum einen erreicht, daß die Strahlungsleistung der einzelnen Strahlungsquellen so gering gehalten werden kann, daß von den Strahlungsquellen zum einen weder eine Gefährdung für die Umwelt noch für Mensch oder Tier ausgehen, zum anderen die einzelnen Investitionskosten aufgrund der Strahlungsquellen mit geringerer Leistung pro Strahlungsquelle sehr gering gehalten werden können. Die Wirkung des erfindungsgemäßen Verfahrens beruht auf einer Kumulation einer Vielzahl von Strahlungsquellen, die in Kombination eine Gesamtstrahlungsleistung abgeben, die zum gewünschten Erwärmen von Straßenoberflächen, oder zu einem Abtauen von Schnee und Eis oder auch zu einem Verdunsten von Flüssigkeit auf der Straßenoberfläche führen.

Insgesamt führt das erfindungsgemäße Verfahren dazu, daß die gewünschte bzw. erforderliche Gesamtstrahlungsenergie über einen längeren Zeitraum von unterschiedlichen Strahlungsquellen abgegeben werden kann, die Strahlungsleistung der einzelnen Strahlungsquellen daher deutlich gesenkt werden kann. Durch die Verteilung der Vielzahl der Strahlungsquellen können auch die notwendigen Investitionskosten verteilt werden.

Es soll hier angemerkt werden, daß das erfindungsgemäße Verfahren je nach Witterung den Einsatz von Schneepflügen oder Schneefräsen, ggf. auch den Einsatz von Salzstreuung, nicht vollständig ersetzen kann und soll. Das erfindungsgemäße Verfahren soll aber in jedem Falle zusätzlich eingesetzt werden, wobei in weiten Bereichen, abhängig von den konkreten Witterungsbedingungen, auch ein ausschließlicher Einsatz des erfindungsgemäßen Verfahrens möglich ist.

Bevorzugt sind die Vielzahl der Strahlungsquellen zur Durchführung des erfindungsgemäßen Verfahrens an einer Vielzahl von Fahrzeugen, insbesondere Privatfahrzeugen und Geschäftsfahrzeugen, sowohl PKWs (Personenkraftwagen) als auch LKWs (Lastkraftwagen) etc., angeordnet. Jedes Fahrzeug kann mit einer oder mehreren Strahlungsquellen ausgestattet sein, die während des Betriebs und des Bewegens des Fahrzeuges elektromagnetische Strahlung emitieren und dabei automatisch Strahlungsenergie auf die Oberfläche von Straßen oder Wegen abgeben.

Durch die dazu erzielte Gemeinschaftswirkung, die hier dem Einzelnen nur geringe zusätzliche Kosten und keinen zusätzlichen Arbeitsaufwand aufbürdet, werden die gemeinschaftlichen Ziele, nämlich ein Abtauen von Schnee und Eis auf den Straßen, was zu einer deutlichen Reduktion von Unfällen und gefährlichen Situationen führen wird, sicher und zuverlässig erreicht. Insbesondere werden die erforderlichen Betriebskosten beim Einsatz der Strahlungsquellen auf die Leute verteilt, die auch direkt den Nutzen aus dem erfindungsgemäßen Verfahren (und dem erfindungsgemäßen Fahrzeug) ziehen.

Es soll hier nochmals darauf hingewiesen werden, daß die Leistung der Strahlungsquellen nicht so hoch ist, daß durch den Einsatz einer einzelnen Strahlungsquelle bereits Schnee und Eis abgetaut wird, der einzelnen Nutzer bzw. Betreiber eines Fahrzeugs mit einer Strahlungsquelle daher nicht direkter Nutznießer seiner eigenen eingesetzten Strahlungsquelle ist, er aber vielmehr in und mit der Gemeinschaft anderer zur allgemeinen Verkehrssicherheit beiträgt, von der er selbst wiederum profitiert.

Bevorzugt werden bei dem erfindungsgemäßen Verfahren insbesondere der Abrollbereich der Reifen bestrahlt, wobei bevorzugt die Breite des bestrahlten Bereiches die jeweilige Reifenbreite deutlich übersteigt, da zum einen die Reifenbreite von Fahrzeug zu Fahrzeug verschieden ist, zum anderen die Spurbreite der unterschiedlichen Fahrzeuge sehr unterschiedlich ist, Auch hier greift wieder das Zusammenwirken der Vielzahl der eingesetzten Strahlungsquellen, so daß in der Gesamtwirkung die für die Vielzahl der Fahrzeuge relevanten Bereiche erwärmt werden, wodurch ein Abtauen von Schnee und ein Verdampfen von Flüssigkeit sichergestellt wird.

Bevorzugt sollte darauf geachtet werden, daß die eingesetzten Strahlungsquellen zumindest einen Abstrahlbereich umfassen, dessen Ausdehnung die Bereiche der Reifenbreite des jeweiligen Fahrzeugs abdecken.

Bei einem besonders bevorzugten Verfahren wird mindestens eine Strahlungsquelle im Außenbereich jeder Seite des Fahrzeugs eingesetzt, um jeweils den Abrollbereich der Reifen gezielt abzudecken. Bei besonders bevorzugten Ausführungsformen des Verfahrens werden pro Fahrzeug zwei bis vier Strahlungsquellen eingesetzt, insbesondere bei größeren Fahrzeugen, wie z. B. LKWs, können selbstverständlich bevorzugt auch mehr Strahlungsquellen eingesetzt werden. Sämtliche Strahlungsquellen werden, wie bereits erwähnt, bevorzugt im Abrollbereich der Reifen eingesetzt, damit die abgestrahlte Energie möglichst effektiv in den Bereichen genutzt wird, in der sie auch benötigt wird, nämlich im Abrollbereich der Reifen, und nicht zwischen den Spuren der Fahrzeuge, wo das Abtauen von Schnee und Eis nicht in diesem Maße erforderlich ist.

Bevorzugt werden als Strahlungsquellen insbesondere Mikrowellenstrahlungsquellen und Infrarotstrahlungssquellen eingesetzt, wobei bevorzugt Mikrowellenstrahlungsquellen verwendet werden, weil Mikrowellen aufgrund ihrer Wellenlänge deutlich besser von Wassermolekülen absorbiert werden, während die Leistung nur in sehr geringem Maße an Luft, den Straßenboden oder andere Objekte abgegeben wird, so daß ein effektives Abtauen der Oberfläche oder Verdunsten bzw. Verdampfen von auf der Oberfläche befindlichem Wasser erreicht wird.

Bei dem erfindungsgemäßen Verfahren wird die Leistung der Strahlungsquellen bevorzugt in Abhängigkeit von der Motorleistung des entsprechenden Fahrzeugs, an dem die Strahlungsquellen angebracht sind, ausgewählt, wobei die Leistung der an dem Fahrzeug angebrachten Strahlungsquellen bevorzugt zwischen 0,1 % und 5 % der Motorleistung des Fahrzeugs beträgt. Bei einem besonders bevorzugten Verfahren beträgt die Leistung der an einem Fahrzeug angebrachten Strahlungsquellen zwischen 0,5 und 2 % der jeweiligen Motorleistung. Damit wird eine Abstimmung der Strahlungsquellen an das jeweilige Fahrzeug erzielt, wobei zum einen erreicht wird, daß ein Betreiben der Strahlungsquellen sich nicht deutlich auf die Fahrleistungen des Fahrzeuges bzw. auf den Kraftstoffverbrauch niederschlägt, zum anderen leistungsstärkere Fahrzeuge stärker an der gemeinschaftlichen Gesamtleistung, d.h. an der Abtauleistung, beteiligt werden. Auch sind leistungsstärkere Fahrzeuge in der Regel teurer, so daß ein Einsatz von leistungsstärkeren und damit auch teureren Strahlungsquellen einen relativen Anteil am Wert des Fahrzeuges nicht überschreitet.

Bevorzugt werden bei dem erfindungsgemäßen Verfahren Strahlungsquellen mit einer Einzelleistung von 100 Watt bis zu 3 kW eingesetzt, wobei bevorzugt Strahlungsquellen zwischen 500 Watt und 1,5 kW verwendet werden.

Die von einer einzelnen Strahlungsquelle bestrahlte Fläche ist bevorzugt im wesentlichen kreisförmig und weist einen Radius von bevorzugt 10 bis 30 cm, insbesondere von 15 bis 25 cm auf. Es ist jedoch auch möglich, die Strahlungsquellen so zu gestalten, daß die bestrahlte Fläche jegliche andere geometrische Form annehmen kann, beispielsweise ovale, rechteckige oder quadratische Formen.

Die bevorzugte Größe der bestrahlten Fläche liegt zwischen ca. 300 cm² und 3.000 cm², insbesondere zwischen 1.000 und 2.000 cm².

Abhängig von der Strahlungsleistung jeder Strahlungsquelle und der bestrahlten Fläche kann die Strahlungsleistung pro bestrahlter Fläche variiert und eingestellt werden, wobei bevorzugt Werte zwischen 0,05 W/cm² und 5 W/cm², insbesondere zwischen 0,2 und 1,5 W/cm² und insbesondere bevorzugt zwischen 0,4 und 0,8 W/cm² ausgewählt werden.

In Abhängigkeit von der Frequenz, mit der Straßen oder Wege von Fahrzeugen, die mit Strahlungsquellen zur Durchführung des erfindungsgemäßen Verfahrens ausgestattet sind, befahren werden, ergibt sich dann eine durchschnittliche Strahlungsleistung, die zum Abtauen von Schnee und Eis und zum Verdunsten von Flüssigkeit führt.

Bewegen sich beispielsweise auf einer Straße mit Abständen von jeweils 10 Metern Fahrzeuge mit einer Länge von 5 Metern, die auf jeder Seite jeweils eine Strahlungsquelle aufweisen, die mit einer Leistung von P = 1.200 W eine Fläche von je etwa 2.000 cm² bestrahlen, was zu einer Strahlungsleistung von 0,6 W/cm² führt, so ergeben sich im Falle von beispielsweise einer kreisrunden Bestrahlungsfläche (Radius r = 25 cm) eine maximale Strahlungsleistung von 0,02 W/cm² auf dem Durchmesser des bestrahlten Flecks in Fahrtrichtung, wenn vereinfachend davon ausgegangen wird, daß alle Fahrzeuge gleichmäßig und in derselben Spur fahren.

Die mit dem erfindungsgemäßen Verfahren erzielten Strahlungsleistungen schließen damit eine Gefährdung der Umwelt aus, sichern aber gleichzeitig den gewünschten Effekt der effektiven Erwärmung von Straßenoberflächen.

Bevorzugt ist vorgesehen, daß die Strahlungsleistung manuell oder automatisch in Abhängigkeit von bestimmten Faktoren, beispielsweise Temperatur, Zustand der Straße oder des Weges, Geschwindigkeit des Fahrzeuges, Anzahl oder Frequenz der Fahrzeuge, Art des Straßen oder Wegbelags etc. variiert wird.

Insbesondere kann ein Fahrzeug zur Durchführung bzw. teilweisen Durchführung und Unterstützung des oben beschriebenen erfindungsgemäßen Verfahrens mit mindestens einer Strahlungsquelle zur Abschaltung einer elektromagnetischen Strahlung auf die Straßenoberfläche, wobei die Strahlungsleistung der mindestens einen Strahlenquelle so ausgelegt ist, daß durch ein Zusammenwirken einer Vielzahl von Fahrzeugen mit mindestens einer Strahlungsquelle eine zum Abtauen schnee- oder eisbedeckter Teilbereiche und zum Abtrocknen feuchter oder nasser Teilbereiche der Straße erforderliche Strahlungsleistung abgestrahlt wird, verwendet werden.

Wie bereits oben im Zusammenhang mit dem erfindungsgemäßen Verfahren erläutert, ist die abgestrahlte Strahlungsleistung bevorzugt abhängig von der Motorleistung des entsprechenden Fahrzeugs und beträgt zwischen 0, 1 % und 5 % der jeweiligen Motorleistung. Bevorzugt hat eine Strahlungsquelle jeweils eine maximale Leistung von 100 Watt bis etwa 3 kW, wobei bevorzugt pro Strahlungsquelle ein Bereich von 300 cm² bis etwa 3.000 cm² der Oberfläche der Straße bestrahlt wird, insbesondere 1.000 cm² bis 2.000 cm².

In Abhängigkeit von der Strahlungsleistung des Strahlers und der bestrahlten Fläche kann die Leistung pro Fläche gesteuert werden, wobei bevorzugte Werte zwischen 0,3 W/cm² und 8 W/cm² pro Strahlungsquelle liegen, mit den bereits oben erläuterten besonders bevorzugten Werten.

Die Strahlungsquellen sind bevorzugt im Bodenbereich des Fahrzeugs angeordnet, so daß sie direkt auf die Straßenoberfläche abstrahlen können. Insbesondere sind sie seitlich im Bodenbereich des Fahrzeugs angeordnet, um, wie oben bereits erläutert, insbesondere die Bereiche der Oberfläche der Straße zu bestrahlen, auf denen die Reifen des Fahrzeugs laufen. Grundsätzlich können die Strahlungsquellen an jeder Position des Fahrzeugs angebracht werden, es ist jedoch bevorzugt, die Strahlungsquellen unmittelbar vor einem Reifen des Fahrzeugs anzubringen, so daß sie möglichst wenig durch den möglicherweise durch die Reifen hochgeschleuderten Dreck etc. verschmutzt werden. Insbesondere ist es vorgesehen, die Strahlungsquellen in einer Vertiefung unterzubringen, so daß sie gegen Verschmutzungen weitgehend geschützt werden. Es ist selbstverständlich ebenso oder zusätzlich möglich, die Strahlungsquellen, die in der Regel mit einer Abdeckscheibe abgeschirmt sein sollen, mittels Reinigungsanlagen, die beispielsweise mit der Scheiben- oder Scheinwerferreinigungsanlage gekoppelt sein können, zu versehen, um die Strahlungsquellen und deren Abstrahlbereich bzw. deren Abschirmscheiben etc. regelmäßig zu reinigen und eine effektive Abstrahlung sicherzustellen.

Bevorzugt sind ferner Abschirmelemente vorgesehen,die zum einen, wie oben erläutert, die Strahlungsquellen gegen Schmutz schützen können, zum anderen sicherstellen, daß die emitierte elektromagnetische Strahlung nicht in ungewünschte Richtungen abgestrahlt oder reflektiert wird, so daß eine Belastung der Umwelt und eine Bestrahlung von nicht gewünschten Bereichen vermieden wird.

Bei einer besonders bevorzugten Ausführungsform weist das Fahrzeug ferner mindestens einen Sensor zur Messung der von der Oberfläche der Straße reflektierten Strahlung auf. Dieser Sensor dient der zusätzlichen Überwachung der abgegeben Strahlungsleistung und darüber hinaus der Kontrolle und Steuerung der Strahlungsquelle in Abhängigkeit von den äußeren Gegebenheiten, insbesondere der Oberflächenbeschaffenheit der Straße etc.

Die Strahlungsquelle ist bevorzugt manuell oder automatisch schaltbar, d.h. sowohl ein- und ausschaltbar als auch in ihrer Leistungsabgabe stufenlos oder in festgelegten Stufen regulierbar. Insbesondere ist bei einer bevorzugten Ausführungsform eine automatische Ein- und / oder Abschaltung vorgesehen, die insbesondere als Sicherheitsabschaltung ausgelegt ist, wobei die automatische Ein- und/oder Abschaltung von unterschiedlichen Meßwerten von Sensoren abhängig sein kann. Die Strahlungsquelle kann insbesondere abgeschaltet werden oder in ihrer Leistung reduziert werden, wenn der von dem oben genannten Sensor ermittelte Wert der reflektierten Leistung einen bestimmten festgelegten Wert überschreitet, die Geschwindigkeit des Wagens einen bestimmten festgelegten Wert unterschreitet, gegebenenfalls auch gekoppelt mit einer minimalen Zeitdauer, über die die Geschwindigkeit des Wagens diesen minimalen Wert unterschreiten muß. Die Leistung der Strahlungsquelle kann insbesondere auch in Abhängigkeit von der Außentemperatur reguliert werden, wobei bevorzugt eine automatische Abschaltung vorgesehen ist, wenn die Außentemperatur einen bestimmten Wert überschreitet, bei dem eine zusätzliche Erwärmung der Straßenoberfläche als nicht mehr sinnvoll erachtet wird. Die Strahlungsquelle kann beispielsweise automatisch immer dann abgeschaltet werden, wenn die Außentemperatur oberhalb von 5° Celsius liegt. Umgekehrt kann die Strahlungsquelle automatisch eingeschaltet oder deren Abstrahlleistung erhöht werden, wenn beispielsweise die gemessene Temperatur unter einen festgelegten Wert, z. B. 3°Celsius, fällt.

Bevorzugt weist ein Fahrzeug auch von außen sichtbare Indikatoren, insbesondere Lampen auf, die signalisieren, ob die Strahlungsquelle in Betrieb ist. Dies ermöglicht eine Überwachung des Betriebszustands der Strahlungsquellen von außen, insbesondere um anzuzeigen, ob von dem Fahrzeug Strahlungsenergie emitiert wird. Dies ist insbesondere dann sinnvoll, wenn für den Betrieb der Strahlungsquellen besondere gesetzliche Regelungen getroffen sind, beispielsweise, daß die Strahlungsquellen bei bestimmten Witterungsbedingungen eingeschaltet werden müssen, falls vorhanden, oder daß auf der anderen Seite die Strahlungsquellen gegebenenfalls ausgeschaltet werden müssen, beispielsweise im Innenstadtbereich oder in Tempo-30-Zonen oder ähnlichem.

Die Erfindung wird anhand der in den folgenden schematischen Abbildungen dargestellten bevorzugten Ausführungsformen erfindungsgemäßer Fahrzeuge im Detail erläutert. Es zeigen:
- Figur 1: schematisch eine erste Ausführungsform eines Fahrzeugs zur Durchführung des erfindungsgemäßen Verfahrens mit je einer Strahlungsquelle auf jeder Seite;
- Figur 2: schematisch einen Ausschnitt aus dem in Figur 1 gezeigten Fahrzeug;
- Figur 3: eine zweite Ausführungsform eines Fahrzeugs mit einer Strahlungsquelle pro Seite und jeweils zwei Sensoren;
- Figur 4: schematisch eine dritte Ausführungsform eines Fahrzeugs zur Durchführung des erfindungsgemäßen Verfahrens;
- Figur 5: schematisch eine vierte Ausführungsform eines Fahrzeugs zur Durchführung des erfindungsgemäßen Verfahrens.

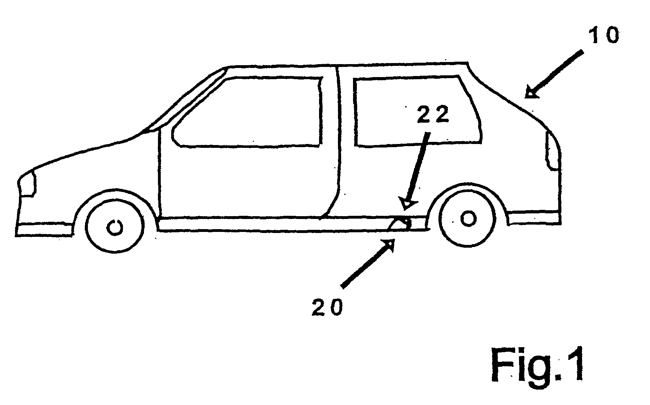

Figur 1 zeigt eine erste Ausführungsform eines Fahrzeugs 10, das mit einer Strahlungsvorrichtung 20 ausgestattet ist, die aus zwei Strahlungsquellen 22 besteht, die jeweils auf der linken und der rechten Seite im Bodenbereich des Fahrzeugs vor dem hinteren Reifen angeordnet ist (in dieser Darstellung ist lediglich die auf der linken Seite angeordnete Strahlungsquelle 22 erkennbar).

Bei dem Fahrzeug handelt es sich um eine privates Kraftfahrzeug, das serienmäßig mit der Strahlungsvorrichtung 20 und den beiden Strahlungsquellen 22 ausgestattet ist.

Bei den Strahlungsquellen 22 handelt es sich um Mikrowellenstrahlungsquellen, die mit einer Frequenz von 2.450 MHz und einer maximalen Leistung von 1.500 Watt pro Strahlungsquelle elektromagnetische Strahlungen aussenden. Die Strahlungsquelle 22 ist stufenweise in ihrer Strahlung regulierbar, wobei Werte von 200 Watt, 400 Watt, 800 Watt, 1.200 Watt und 1.500 Watt einstellbar sind.

Beide Strahlungsquellen sind so miteinander gekoppelt, daß sie immer mit identischer Leistung abstrahlen, während die Strahlungsleistung manuell vom Fahrer des Fahrzeuges eingestellt werden kann,

Zusätzlich ist die Strahlungsvorrichtung 20 mit den Strahlungsquellen 22 mit einem Außentemperaturfühler (nicht gezeigt) gekoppelt, so daß die Strahlungsvorrichtung 20 und die Strahlungsquellen 22 automatisch abgeschaltet werden, wenn die Außentemperatur über einen Zeitraum von mehr als fünf Minuten über einem Wert von 5° Celsius liegt.

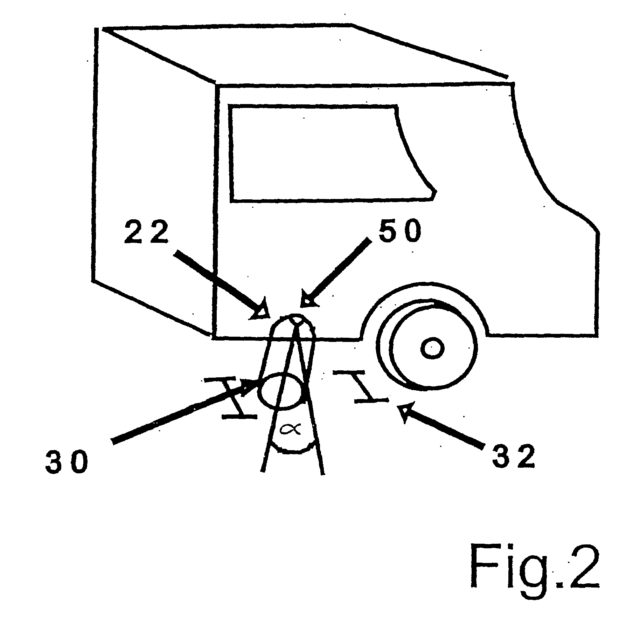

Figur 2 zeigt einen Ausschnitt aus dem in Figur 1 gezeigten Fahrzeug schematisch in einer perspektivischen Darstellung. Wie aus Figur 2 ersichtlich, strahlt die Strahlungsquelle 22 Mikrowellenstrahlung im wesentlichen in einem Kegel ab, dessen Hauptachse mit einer Vertikalen einen Winkel α einschließt, wobei der Kegel lediglich in Fahrtrichtung des Fahrzeuges geneigt ist. Der Winkel a beträgt bei dem in Figur 2 gezeigten Fahrzeug etwa 20 Grad.

Der durch die Strahlungsquelle 22 bestrahlte Bereich 30 der Oberfläche der Straße ist im wesentlichen kreisförmig, wobei er einen Radius von etwa 25 cm aufweist und damit einen bestrahlten Bereich 30 von etwa 2.000 cm² erzeugt.

Der bestrahlte Bereich 30 ist so gewählt, daß er die Breite des Reifens, die im wesentlichen dem Abrollbereich 32 entspricht, bei der in Figur 2 gezeigten Ausführungsform ca. 20 cm, deutlich überschreitet, wodurch ein breiterer Bereich zum Abrollen der Reifen bestrahlt wird.

Die Strahlungsquellen 22 sind durch eine sie umschließende Abschirmung so umschlossen, um zum einen eine Abstrahlung von Mikrowellenleistung in ungewollte Bereiche zu vermeiden und zum anderen die Strahlungsquellen 22 vor Verschmutzungen zu schützen.

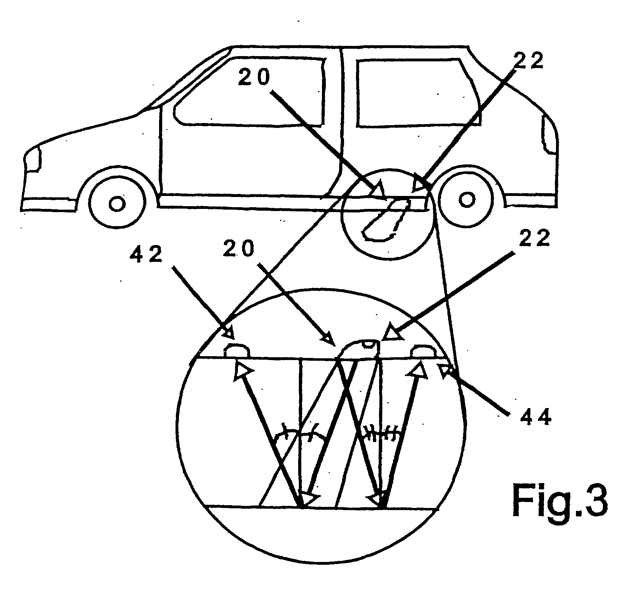

Figur 3 zeigt eine zweite Ausführungsform eines Fahrzeuges, das eine Strahlungsvorrichtung 20 mit zwei Strahlungsquellen 22 umfaßt, die im wesentlichen der Strahlungsvorrichtung 20 der in den Figuren 1 und 2 gezeigten Ausführungsform des erfindungsgemäßen Fahrzeugs 10 entspricht. Auch bei der in dieser Ausführungsform vorgesehenen Strahlungsquellen 22 handelt es sich um Strahlungsquellen, die eine Mikrowellenstrahlung mit einer Wellenlänge von 2.450 MHz abstrahlen, wobei die Strahlungsquelle jedoch eine maximale Leistung von 2 kW aufweist.

Zusätzlich sind bei der in Figur 3 gezeigten Ausführungsform des Fahrzeugs zwei Sensoren 42 und 44 vorgesehen, die die Leistung der von der Straße reflektierten Mikrowellenstrahlung messen. Die Sensoren 42 und 44 liefern Daten an eine Verarbeitungseinheit, bevorzugt einen Computer, der automatisch die Leistung der Strahlungsquellen 22 steuert. Übersteigt beispielsweise die von den Sensoren 42 und 44 gemessene reflektierte Strahlungsleistung einen bestimmten festgelegten Wert, so wird die Leistung der Strahlungsquellen 22 automatisch reduziert, so daß eine Gefährdung der Umwelt durch reflektierte Strahlung ausgeschlossen wird.

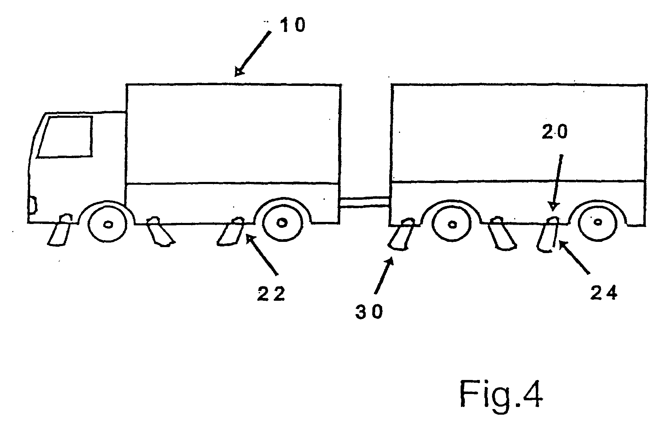

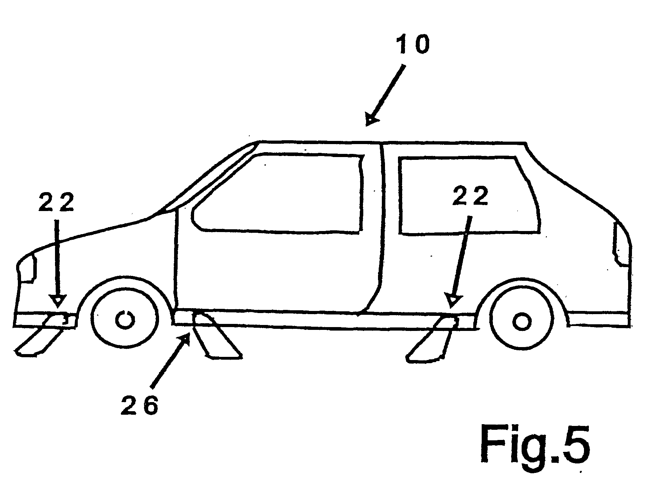

In den Figuren 4 und 5 sind zwei weitere Ausführungsformen eines Fahrzeuges zum Durchführen eines erfindungsgemäßen Verfahrens dargestellt.

Figur 4 zeigt ein Fahrzeug 10, in diesem Falle einen LKW mit Anhänger, bei dem eine Strahlungsvorrichtung 20 mit insgesamt 12 Strahlungsquellen 22, 24 vorgesehen sind, wobei insgesamt im Zugfahrzeug auf jeder Seite jeweils 3 Strahlungsquellen 22 und im Anhänger ebenfalls auf jeder Seite jeweils 3 Strahlungsquellen 24 vorgesehen sind.

Sämtliche Strahlungsquellen 22, 24 bestrahlen einen im wesentlichen ovalen Bereich 30 der Straßenoberfläche, wobei der ovale Bereich 30 in Fahrtrichtung einen Durchmesser von ca. 30 cm aufweist, während der Durchmesser des ovalen Bereichs 30 in einer Richtung quer zur Fahrtrichtung ca. 50 cm beträgt.

Bei den Strahlungsquellen 22, 24 handelt es sich ebenfalls um Mikrowellenstrahlungsquellen 22, 24, die eine Mikrowellenstrahlung mit einer Wellenlänge von 2.450 MHz ausstrahlen. Die maximale Leistung der einzelnen Strahlungsquellen 22, 24 beträgt 3 kW und ist, wie oben in Zusammenhang mit der ersten Ausführungsform erläutert, stufenweise einstellbar mit Leistungsstufen von 500 Watt, 1.000 Watt, 1.500 Watt, 2.000 Watt und 3.000 Watt.

Figur 5 zeigt eine dritte Ausführungsfonn eines erfindungsgemäßen Fahrzeugs, das mit jeweils drei Strahlungsquellen 22, 26 auf jeder Seite des Fahrzeugs 10 ausgestattet ist.

Bei den Strahlungsquellen 22 handelt es sich um Mikrowellenstrahlungsquellen, die eine maximale Leistung von 2 kW aufweisen, während die Strahlungsquelle 26 elektromagnetisches Licht im Infrarotbereich emitiert.

Es soll an dieser Stelle nochmals darauf hingewiesen werden, daß die Figuren 1 bis 5 lediglich schematische Darstellungen zeigen, und insbesondere keine Rückschlüsse auf die Dimensionierung der Strahlungsquellen an sich und der bestrahlten Bereiche zulassen. Insbesondere ist auch darauf hinzuweisen, daß die Positionierung der Strahlenquellen 22, 24, 26 auch abweichend von den hier gezeigten Ausführungsformen gewählt werden kann. Sowohl Anordnung als auch Art der Strahlungsquellen ist frei wählbar und kombinierbar.

Die in der vorstehenden Beschreibung, den Ansprüchen und der Zeichnung offenbarten Merkmale können sowohl einzeln als auch in beliebiger Kombination für die Realisierung der Erfindung in ihren verschiedenen Ausgestaltungen von Bedeutung sein.

### Bezugszeichenliste

- 10: Fahrzeug
- 20: Strahlungsvorrichtung
- 22: Strahlungsquelle
- 24: Strahlungsquelle
- 26: Strahlungsquelle
- 30: bestrahlter Bereich
- 32: Abrollbereich
- 42: Sensor
- 44: Sensor
- 50: Abschirmelement

## Patentansprüche

1. Verfahren zum Erwärmen oder Abtauen von Straßenoberflächen, bei dem die Oberfläche der Straße mit einer elektromagnetischen Strahlung bestrahlt wird,
**dadurch gekennzeichnet, daß**
die Bestrahlung durch eine Vielzahl von Strahlungsquellen (22, 24, 26), die an voneinander unabhängigen Fahrzeugen (10) vorgesehen sind, durch einen individuellen Betrieb der Fahrzeuge (10) nacheinander und zeitlich voneinander beabstandet durchgeführt wird, wobei die Strahlungsleistung der an je einem Fahrzeug vorgesehenen Strahlungsquellen (22, 24, 26) so gering ist, daß eine zum Erwärmen oder Abtauen von Straßenoberflächen ausreichende Gesamtstrahlleistung nur durch das Zusammenwirken der Vielzahl der Strahlungsquellen (22, 24, 26) an mehreren Fahrzeugen (10) erreicht wird.

2. Verfahren nach Anspruch 1, **dadurch gekennzeichnet, daß** mindestens je eine Strahlungsquelle (22, 24, 26) an einem Fahrzeug (10) angeordnet ist.

3. Verfahren nach einem der vorangehenden Ansprüchen, **dadurch gekennzeichnet, daß** mindestens eine Strahlungsquelle (22, 24, 26) auf solche Bereiche der Straßenoberfläche abstrahlt, die einem Abrollbereich (32) von Reifen der jeweiligen Fahrzeuge (10), an denen die mindestens eine Strahlenquelle vorgesehen ist, entsprechen.

4. Verfahren nach Anspruch 2 oder 3, **dadurch gekennzeichnet, daß** der von der mindestens einen Strahlungsquellen (22, 24, 26) bestrahlte Bereich (30) der Straßenoberfläche in einer Richtung quer zur Fahrtrichtung wenigstens eine Ausdehnung hat, die der Breite eines Reifens des entsprechenden Fahrzeugs (10) entspricht.

5. Verfahren nach einem der Ansprüche 2 bis 4, **dadurch gekennzeichnet, daß** mindestens eine Strahlungsquelle (22, 24, 26) im Außenbereich jeder Seite des Fahrzeugs (10) vorgesehen ist.

6. Verfahren nach einem der Ansprüche 2 bis 5, **dadurch gekennzeichnet, daß** jedes Fahrzeug wenigstens vier Strahlungsquellen (22, 24, 26) umfaßt.

7. Verfahren nach einem der vorangehenden Ansprüchen, **dadurch gekennzeichnet, daß** die Strahlungsquellen (22, 24, 26) eine Strahlung im Mikrowellenbereich oder im Infrarotbereich emitieren.

8. Verfahren nach einem der Ansprüche 2 bis 7, **dadurch gekennzeichnet, daß** die Leistung der mindestens einen Strahlungsquelle (22, 24, 26) in Abhängigkeit von der Motorleistung des jeweiligen Fahrzeugs gewählt ist.

9. Verfahren nach Anspruch 8, **dadurch gekennzeichnet, daß** die maximale Leistung der mindestens einen Strahlungsquelle (22, 24, 26) zwischen 0,1 % und 5 % der Motorleistung des entsprechenden Fahrzeugs (10) beträgt.

10. Verfahren nach einem der vorangehenden Ansprüche, **dadurch gekennzeichnet, daß** die mindestens eine Strahlungsquelle (22, 24, 26) eine Leistung zwischen 100 W und 3 kW aufweist.

11. Verfahren nach einem der vorangehenden Ansprüche, **dadurch gekennzeichnet, daß** durch die mindestens eine Strahlungsquelle (22, 24, 26) jeweils ein Bereich (30) der Oberfläche der Straße mit einer Fläche von 300 cm² bis 3.000 cm² bestrahlt wird.

12. Verfahren nach einem der vorangehenden Ansprüche, **dadurch gekennzeichnet, daß** die von der mindestens einen Strahlungsquellen abgegebene Strahlungsintensität auf den jeweiligen bestrahlten Bereich zwischen 0,05 und 5 W/cm², bevorzugt zwischen 0,2 und 1,5 W/cm² und insbesondere zwischen 0,4 und 0,8 W/cm² liegt.

## Claims

1. A method of heating or defrosting road surfaces, wherein the surface of the road is irradiated with an electromagnetic radiation, **characterised in that** the irradiation is carried out by a plurality of radiation sources (22, 24, 26), which are provided on vehicles (10) independent of one another, by individual operation of the vehicles (10) successively and at spaced intervals of time, the radiation power of the radiation sources (22, 24, 26) provided on each vehicle being so low that a total radiation power sufficient to heat or defrost road surfaces is achieved only by co-operation of the plurality of the radiation sources (22, 24, 26) on a plurality of vehicles (10).

2. A method according to claim 1, **characterised in that** at least one radiation source (22, 24, 26) is provided on each vehiche (10).

3. A method according to any one of the preceding claims, **characterised in that** at least one radiation source (22, 24, 26) emits radiation to those zones of the road surface which correspond to a roll-over zone (32) of tyres of the respective vehicles (10) on which the at least one radiation source is provided.

4. A method according to claim 2 or 3, **characterised in that** the zone (30) of the road surface irradiated by the at least one radiation sources (22, 24, 26) has, in a direction extending transversely of the direction of travel, at least an extent corresponding to the width of a tyre of the corresponding vehicle (10).

5. A method according to any one of claims 2 to 4, **characterised in that** at least one radiation source (22, 24, 26) is disposed in the outer zone of each side of the vehicle (10).

6. A method according to any one of claims 2 to 5, **characterised in that** each vehicle comprises at least four radiation sources (22, 24, 26).

7. A method according to any one of the preceding claims, **characterised in that** the radiation sources (22, 24, 26) emit a radiation in the microwave range or in the infrared range.

8. A method according to any one of claims 2 to 7, **characterised in that** the power of the at least one radiation source (22, 24, 26) is selected in dependence on the engine power of the respective vehicle.

9. A method according to claim 8, **characterised in that** the maximum power of the at least one radiation source (22, 24, 26) is between 0.1% and 5% of the engine power of the corresponding vehicle (10).

10. A method according to any one of the preceding claims, **characterised in that** the at least one radiation source (22, 24, 26) has a power of between 100 W and 3 kW.

11. A method according to any one of the preceding claims, **characterised in that** a zone (30) of the road surface having an area of 300 cm² to 3000 cm² is irradiated in each case by the at least one radiation source 22, 24, 26).

12. A method according to any one of the preceding claims, **characterised in that** the radiation intensity delivered by the at least one radiation sources to the respective irradiated zone is between 0.05 and 5 W/cm², preferably between 0.2 and 1.5 W/cm² and particularly between 0.4 and 0.8 W/cm².

## Revendications

1. Procédé pour le réchauffage ou le dégivrage de surfaces de chaussée, dans lequel la surface de la chaussée est irradiée par un rayonnement électromagnétique,
**caractérisé en ce que** le rayonnement est effectué par une pluralité de sources de rayonnement (22, 24, 26), prévues sur des véhicules (10) indépendants les uns des autres, par un trafic individuel des véhicules (10) les uns après les autres et de façon temporellement espacée les uns des autres, la puissance du rayonnement des sources de rayonnement (22, 24, 26) prévues sur chaque véhicule étant d'une faiblesse telle qu'une puissance de rayonnement globale, suffisant pour chauffer ou dégivrer les surfaces de chaussée, ne soit atteinte que par la coopération de la pluralité des sources de rayonnement (22, 24, 26) installées sur plusieurs véhicules (10).

2. Procédé selon la revendication 1, **caractérisé en ce qu'**au moins chaque fois une source de rayonnement (22, 24, 26) est disposée sur un véhicule (10).

3. Procédé selon l'une des revendications précédentes, **caractérisé en ce qu'**au moins une source de rayonnement (22, 24, 26) irradie sur des zones de la surface de chaussée correspondant à une zone de roulement (32) de pneumatique des véhicules (10) respectifs, sur lesquels est prévue la au moins une source de rayonnement.

4. Procédé selon la revendication 2 ou 3, **caractérisé en ce que** la zone (30), irradiée par la au moins une source de rayonnement (22, 24, 26), de la surface de chaussée dans une direction transversale à la direction de roulage présente au moins une étendue correspondant à la largeur d'un pneumatique du véhicule (10) correspondant.

5. Procédé selon l'une des revendications 2 à 4, **caractérisé en ce qu'**au moins une source de rayonnement (22, 24, 26) est prévue dans la zone extérieure de chaque côté du véhicule (10).

6. Procédé selon l'une des revendications 2 à 5, **caractérisé en ce que** chaque véhicule comprend au moins quatre sources de rayonnement (22, 24, 26).

7. Procédé selon l'une des revendications précédentes, **caractérisé en ce que** les sources de rayonnement (22, 24, 26) émettent un rayonnement dans la plage des micro-ondes ou dans la plage des infrarouges.

8. Procédé selon l'une des revendications 2 à 7, **caractérisé en ce que** la puissance de la au moins une source de rayonnement (22, 24, 26) est choisie en fonction de la puissance de moteur du véhicule spécifique.

9. Procédé selon la revendication 8, **caractérisé en ce que** la puissance maximale de la au moins une source de rayonnement (22, 24, 26) est comprise entre 0,1 % et 5 % de la puissance moteur du véhicule (10) correspondant.

10. Procédé selon l'une des revendications précédentes, **caractérisé en ce que** la au moins une source de rayonnement (22, 24, 26) présente une puissance comprise entre 100 W et 3 kW.

11. Procédé selon l'une des revendications précédentes, **caractérisé en ce que**, au moyen de la au moins une source de rayonnement (22, 24, 26), on irradie chaque fois une zone (30) de la surface de la chaussée, d'une aire de 300 cm² à 3.000 cm².

12. Procédé selon l'une des revendications précédentes, **caractérisé en ce que** l'intensité de rayonnement, émise par la au moins source de rayonnement sur la zone chaque irradiée, est située entre 0,05 et 5 W/cm², de préférence entre 0,2 et 1,5 W/cm² et, en particulier, entre 0,4 et 0,8 W/cm².
